# EUROPEAN PATENT SPECIFICATION

(11) **EP 4 145 037 B1**
(45) Date of publication and mention of the grant of the patent: **17.12.2025**
(21) Application number: 22193383.1
(22) Date of filing: 01.09.2022
(51) Int. Cl.: F16M 11/18, B62D 55/00, F16M 11/42

(54) **SELF-PROPELLED SUPPORT FRAME**
SELBSTFAHRENDER TRAGRAHMEN
CADRE DE SUPPORT AUTOPROPULSÉ

(30) Priority: 01.09.2021 IT 202100004322 U
(43) Date of publication of application: 08.03.2023
(73) Proprietor: Tecnomec Borghi S.r.l., 41042 Fiorano Modenese MODENA (IT)
(72) Inventor: BORGHI, Gianfranco, 41042 Fiorano Modenese (MO) (IT)
(74) Representative: Luppi Intellectual Property S.r.l.

(56) References cited:
- EP-A2- 0 755 896
- JP-A- 2000 300 041
- US-A1- 2016 216 596

## Description

### BACKGROUND OF THE INVENTION

The present invention relates to a self-propelled support frame, in particular a self-propelled support frame for supporting a machine for industrial processes, so as to make it easy to move the machine inside an industrial establishment even when the machine has relevant weight and dimensions.

### STATE OF THE ART

Machines of significant dimensions and weight are generally fitted in fixed positions inside industrial establishments and cannot be moved from their position without being dismantled, or without the help of complex and expensive equipment like, for example, overhead cranes.

This makes it complicated and expensive to perform maintenance, manoeuvring and cleaning tasks on the floor on which the machines are placed which have to be moved from their position in order to perform the aforesaid tasks.

The manoeuvring spaces for being able to perform correct positioning of the machine inside an existing production line are often minimized and, in some cases, it is difficult, if not impossible, to position the machine even with the help of forklifts or positioning equipment which have no manoeuvring or access space because of the conformation of the premises and the encumbrances already present.

Currently, the self-propelling frames feature articulated commercial wheels, thus able to move 360° in any direction. Therefore, moving a machine on articulated wheels does not enable to keep the machine aligned with the other machines in its production line, so with the loss of references of some positioning, whereas, in the case of frames mounted on rails, the latter are normally fixed to the ground and usually are double-rails, as shown in JP2000300041A, forcing burdensome works on the floor and also causing operating inconveniences because of a system that is fixed to the ground which often hinders the operators.

### DESCRIPTION OF THE INVENTION

One object of the present invention is to make available easy movement of a machine of significant dimensions and weight, without the need to have to use complex and costly equipment.

The object of the invention is achieved with a self-propelled support frame according to claim 1.

Thanks to the invention, it is possible to move a machine for industrial processes from its position inside an industrial establishment in a simple manner to make possible operations of maintaining, positioning, and cleaning of the floor on which the machine is positioned, or for any other reason.

Thanks to the solution offered by the present invention, with a single linear guiding device for the wheels of the support frame (monorail), that can be fixed to the ground with simple dowels or the like and which is able to fold and reduce its overall encumbrance on the ground during the operating steps, the machines provided with the support frame according to the invention, once they have been positioned in the working positions in line, can move along the rail and return to the exact departure point to free up, for example temporarily, a space required for other self-propelled units of adjacent machines. Further, and thanks to the sensors used and to the interconnected software logic, these operations can be performed completely automatically.

### BRIEF DESCRIPTION OF THE DRAWINGS

Further features and advantages of the invention are clear from the description of one embodiment of the invention that follows, given merely by way of non-limiting example, with reference to the attached drawings, in which:

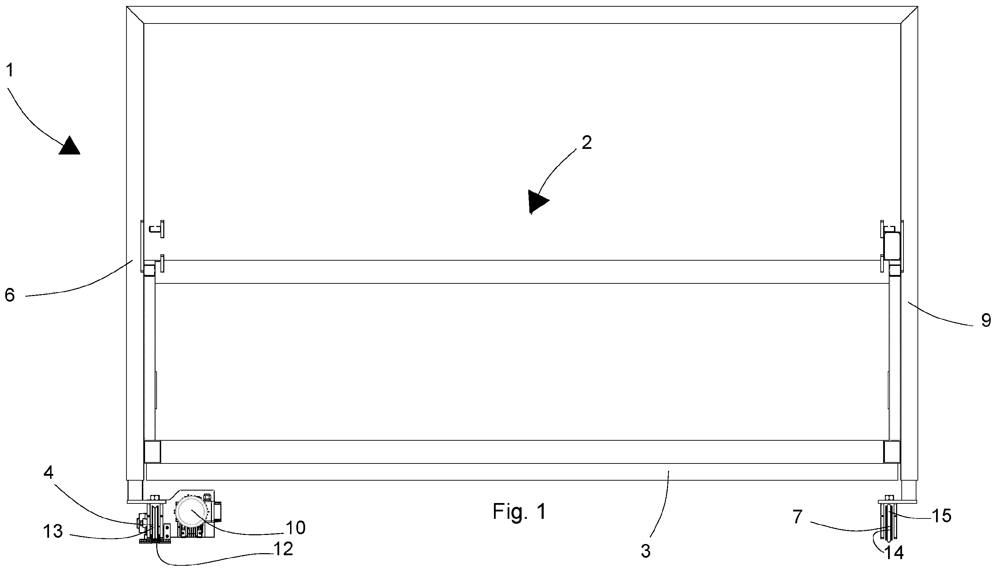

Figure 1 is a raised front view of a machine according to the invention;

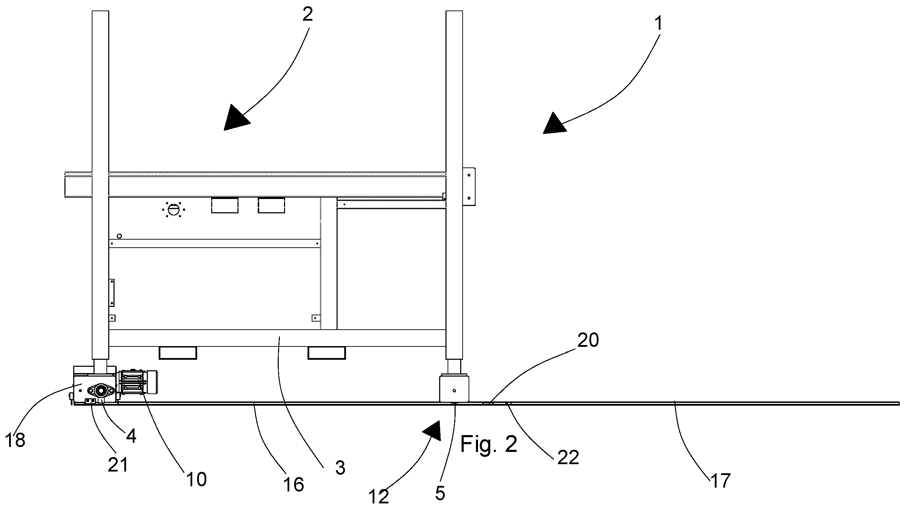

Figure 2 is a raised side view of the machine of Figure 1 in a first configuration;

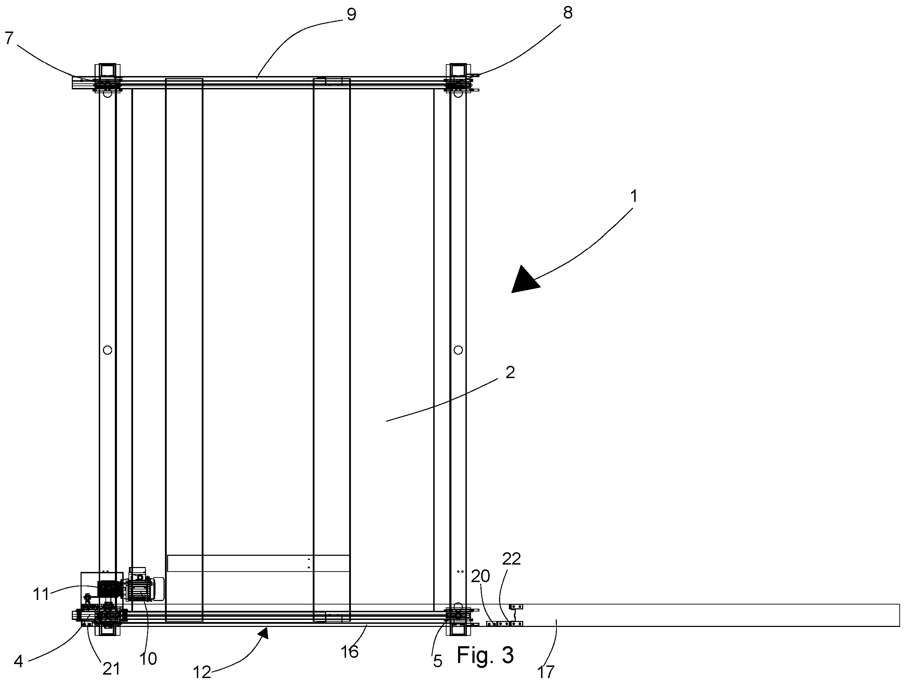

Figure 3 is a top view of the machine according to the invention;
Figure 4 is a view like that of Figure 2 in a second configuration;
Figure 5 is an enlarged and sectioned detail of Figure 4;
Figure 6 is an enlarged detail of Figure 1.

The support frame 1 according to the invention, which is suitable for supporting an industrial machine 2, is provided with wheels, fixed to the lower part 3 of the frame 1, for example at the four corners of the lower part 3.

The wheels comprise a first motor-driven wheel 4, a second freely rotatable wheel 5 aligned with the motor-driven wheel 4 at a first side 6 of the frame 1, a third freely rotatable wheel 7 and a fourth freely rotatable wheel 8 arranged aligned between themselves at a second side 9 of the frame 1, opposite the first side 6.

The first wheel 4 is driven by a motor 10, for example an electric motor, by a speed reduction gear 11.

The first wheel 4 and the second freely rotatable wheel 5 can slide on a rail 12 that has an upturned V-shaped cross section. The first wheel 4 and the second freely rotatable wheel 5 are provided with a respective throat 13 also having a cross section in the shape of a "V", i.e., conjugated with the shape of the rail 12, so that the first wheel 4 and the second wheel 5 can be form-coupled with and slide on the rail 12. Other embodiments of the cross section of the rail 12 and of the throat 13 are obviously possible that are chosen so that the first wheel 4 and the second wheel 5 can be form-coupled with the rail 12 and slide thereupon.

The third wheel 7 and the fourth wheel 8 are also provided with a respective throat 14, suitable for housing a respective ring 15 of elastic material, for example rubber, to enable the third wheel 7 and the fourth wheel 8 to slide on a floor of an environment in which the machine 2 is arranged.

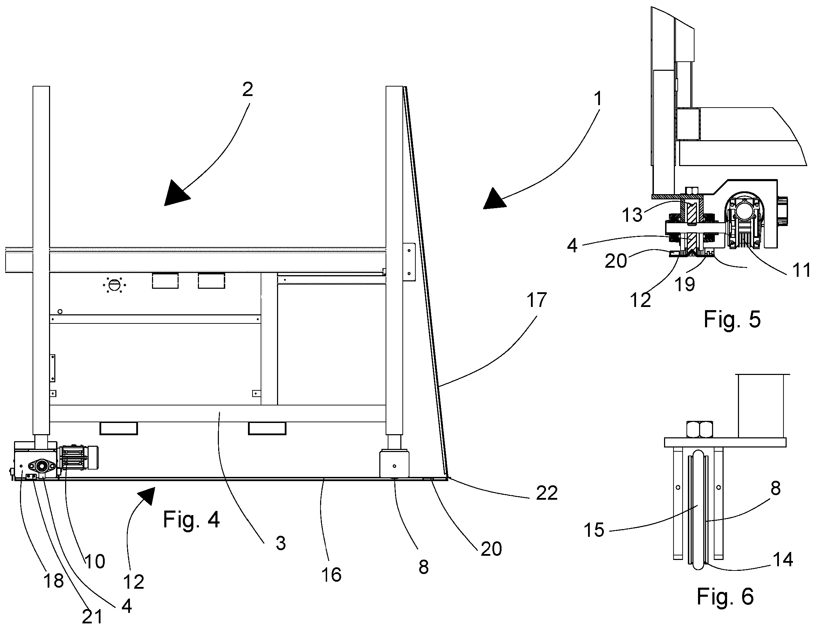

The rail 12 consists of a first rail part 16 fixed to the floor of the environment in which the machine 2 is arranged and of a second rail part 17, hinged, by a hinge 22, to the first rail part 16 so as to be able to rotate between a first position, in which the second rail part 17 adheres to the floor, to allow the machine 2 to move from the first rail part 16 to the second rail part 17 and a second position, shown in Figure 4, in which the second rail part 17 is raised from the floor and rests on the frame 1, to which it can be fixed.

This second position is used when it is not required to move the machine 2 from its position on the first rail part 16, so that the second rail part 17 is not a hindrance to operators who have to move in the vicinity of the machine 2.

Sensor means 19 configured to detect at least one metal plate 20, which is fixed to the rail 12 and acts as a stop to limit the stroke of the machine 2 along the rail 12, is fitted to a support 18 of the first wheel 4.

A further metal plate 21, which is identical to the at least one metal plate 20, the purpose of which is to act as an emergency stop in the event of a malfunction of the sensor means 19, is also fitted to the support 18.

The further metal plate 21 is arranged so as to mechanically interfere with the at least one metal plate 20, to block the movement of the machine 2, in the event of a malfunction of the sensor means 19.

When the machine 2, placed at the first part 16 of the rail 12, has to be moved, for any reason, the second part 17 of the rail 12, initially resting on and fixed to the frame 1 of the machine 2, is rotated until it comes to rest on the floor, to which the first part 16 of the rail 12 is fixed, and is locked in position by locking means that is not visible in the figures.

In order to move the machine 2, the motor 10, that rotates the first wheel 4, is actuated, so as to move the machine 2 along the rail 12, until it is taken to the second part 17 of the rail 12. When the sensor means 19 fitted to the support 18 of the first wheel 4 detects the presence of the at least one metal plate 20 it generates a signal that causes the motor 10 to stop and terminates the movement of the machine 2.

In the event of a malfunction of the sensor means 19, the end of the movement of the machine 2 is obtained thanks to the mechanical interference of the further metal plate 21 with the at least one metal plate 20, when the first wheel 4, whilst the machine moves on the rail 12, reaches the at least one metal plate 20.

## Claims

1. Self-propelled support frame (1) for a machine (2) for industrial processes, wherein to a lower part (3) of the frame (1) are fixed a first motor-driven wheel (4), a second idler wheel (5), that is aligned with the first motor-driven wheel (4) at a first side (6) of the frame (1), a third idler wheel (7) and a fourth idler wheel (8) that are arranged aligned at a second side (9) of the frame (1), opposite the first side (6), **characterized in that** the frame (1) comprises a single linear guiding device (12), shaped as a mono-rail, fixed to a floor of an environment in which the machine (2) is placed, wherein the first motor-driven wheel (4) and the second idler wheel (5) are shaped so as to be able to slide on the rail (12).

2. Support frame (1) according to claim 1, wherein the first wheel (4) is driven to rotate by a motor (10) through a speed reducer (11).

3. Support frame (1) according to claim 1, or 2, wherein the first wheel (4) and the second wheel (5) are provided with a respective throat (13) having a cross section shaped so as to be form-coupled with the rail (12).

4. Support frame (1) according to claim 3, wherein said rail (12) has a cross section in the shape of an upturned "V".

5. Support frame (1) according to claim 4, wherein the respective throat (13) of the first wheel (4) and of the second wheel (5) has a "V"-shaped cross section, suitable for form-coupling with the rail (12).

6. Support frame (1) according to one of the preceding claims, in which the third wheel (7) and the fourth wheel (8) are provided with a respective throat (14) housing a respective ring (15) of elastic-plastic material.

7. Support frame (1) according to one of the preceding claims, wherein said rail (12) comprises a first rail part (16) and a second rail part (17) connected to the first part (16) by a hinge (22), so as to be able to rotate with respect to the first part (16).

8. Support frame (1) according to one of the preceding claims, wherein sensor means (19) suitable for detecting the presence of at least one metal plate (20) fixed to the rail (12) is fixed to a support (18) of the first wheel (4).

9. Support frame (1) according to claim 8, wherein to said support (18) a further metal plate (21) is fixed that is arranged so as to mechanically interfere with said at least one metal plate (20), when the first wheel (4), by moving on the rail (12), reaches said at least one metal plate (20).

## Patentansprüche

1. Tragrahmen (1) mit Selbstantrieb für eine Maschine (2) für industrielle Prozesse, wobei an einem unteren Teil (3) des Rahmens (1) ein erstes motorgetriebenes Rad (4), ein zweites Leerlaufrad (5), das mit dem ersten motorgetriebenen Rad (4) an einer ersten Seite (6) des Rahmens (1) ausgerichtet ist, ein drittes Leerlaufrad (7) und ein viertes Leerlaufrad (8) befestigt sind, die an einer zweiten Seite (9) des Rahmens (1) gegenüber der ersten Seite (6) ausgerichtet angeordnet sind, **dadurch gekennzeichnet, dass** der Rahmen (1) eine einzelne lineare Führungsvorrichtung (12) in Form einer Einbahnschiene umfasst, die an einem Boden einer Umgebung befestigt ist, in der die Maschine (2) platziert ist, wobei das erste motorgetriebene Rad (4) und das zweite Leerlaufrad (5) geformt sind, um in der Lage zu sein, auf der Schiene (12) zu gleiten.

2. Tragrahmen (1) nach Anspruch 1, wobei das erste Rad (4) durch einen Motor (10) über einen Drehzahlminderer (11) angetrieben wird, sich zu drehen.

3. Tragrahmen (1) nach Anspruch 1 oder 2, wobei das erste Rad (4) und das zweite Rad (5) jeweils mit einem Hals (13) versehen sind, dessen Querschnitt geformt ist, um formschlüssig mit der Schiene (12) verbunden zu werden.

4. Tragrahmen (1) nach Anspruch 3, wobei die Schiene (12) einen Querschnitt in der Form eines umgedrehten "V" aufweist.

5. Tragrahmen (1) nach Anspruch 4, wobei der jeweilige Hals (13) des ersten Rads (4) und des zweiten Rads (5) einen _{"}V"-förmigen Querschnitt aufweist, der für eine formschlüssige Verbindung mit der Schiene (12) geeignet ist.

6. Tragrahmen (1) nach einem der vorstehenden Ansprüche, bei dem das dritte Rad (7) und das vierte Rad (8) mit einem jeweiligen Hals (14) versehen sind, in dem jeweils ein Ring (15) aus elastischem Kunststoffmaterial aufgenommen ist.

7. Tragrahmen (1) nach einem der vorstehenden Ansprüche, wobei die Schiene (12) einen ersten Schienenteil (16) und einen zweiten Schienenteil (17) umfasst, der mit dem ersten Teil (16) durch ein Scharnier (22) verbunden ist, um in der Lage zu sein, sich in Bezug auf den ersten Teil (16) zu drehen.

8. Tragrahmen (1) nach einem der vorstehenden Ansprüche, wobei ein Sensormittel (19), das geeignet ist, das Vorhandensein mindestens einer Metallplatte (20) zu erfassen, die an der Schiene (12) befestigt ist, an einem Träger (18) des ersten Rades (4) befestigt ist.

9. Tragrahmen (1) nach Anspruch 8, wobei an dem Träger (18) eine weitere Metallplatte (21) befestigt ist, die angeordnet ist, um mit der mindestens einen Metallplatte (20) mechanisch zu interferieren, wenn das erste Rad (4) durch Bewegen auf der Schiene (12) die mindestens eine Metallplatte (20) erreicht.

## Revendications

1. Châssis de support automoteur (1) pour une machine (2) pour des processus industriels, dans lequel à une partie inférieure (3) du châssis (1) sont fixées une première roue motorisée (4), une deuxième roue folle (5), qui est alignée avec la première roue motorisée (4) à un premier côté (6) du châssis (1), une troisième roue folle (7) et une quatrième roue folle (8) qui sont disposées alignées à un second côté (9) du châssis (1), à l'opposé du premier côté (6), **caractérisé en ce que** le châssis (1) comprend un seul dispositif de guidage linéaire (12), en forme de mono-rail, fixé au sol d'un environnement dans lequel la machine (2) est placée, dans lequel la première roue motorisée (4) et la deuxième roue folle (5) sont formées de manière à pouvoir glisser sur le rail (12).

2. Châssis de support (1) selon la revendication 1, dans lequel la première roue (4) est entraînée en rotation par un moteur (10) à travers un réducteur de vitesse (11).

3. Châssis de support (1) selon la revendication 1, ou 2, dans lequel la première roue (4) et la deuxième roue (5) sont pourvues d'une gorge (13) respective dont la section transversale est formée de manière à être accouplée au rail (12).

4. Châssis de support (1) selon la revendication 3, dans lequel ledit rail (12) présente une section transversale en forme de «V» renversé.

5. Châssis de support (1) selon la revendication 4, dans lequel la gorge (13) respective de la première roue (4) et de la deuxième roue (5) présente une section transversale en forme de «V», adaptée à l'accouplement de forme avec le rail (12).

6. Châssis de support (1) selon l'une quelconque des revendications précédentes, dans lequel la troisième roue (7) et la quatrième roue (8) sont pourvues d'une gorge (14) respective logeant un anneau (15) respectif en matériau élasto-plastique.

7. Châssis de support (1) selon l'une quelconque des revendications précédentes, dans lequel ledit rail (12) comprend une première partie de rail (16) et une seconde partie de rail (17) reliée à la première partie (16) par une charnière (22), de manière à pouvoir tourner par rapport à la première partie (16).

8. Châssis de support (1) selon l'une quelconque des revendications précédentes, dans lequel un moyen de capteur (19) apte à détecter la présence d'au moins une plaque métallique (20) fixée au rail (12) est fixé à un support (18) de la première roue (4).

9. Châssis de support (1) selon la revendication 8, dans lequel une autre plaque métallique (21) est fixée audit support (18) et est disposée de manière à interférer mécaniquement avec ladite au moins une plaque métallique (20), lorsque la première roue (4), en se déplaçant sur le rail (12), atteint ladite au moins une plaque métallique (20).
